(19) Europäisches Patentamt
European Patent Office
Office européen des brevets

(11) Publication number: 0 515 750 A2

# (12) EUROPEAN PATENT APPLICATION

(21) Application number: **91307716.0**

(51) Int. Cl.⁵: **C08G 69/48**, D21H 17/55

(22) Date of filing: **21.08.91**

(30) Priority: **29.05.91 US 706938**

(43) Date of publication of application:
**02.12.92 Bulletin 92/49**

(84) Designated Contracting States:
**AT BE CH DE DK ES FR GB GR IT LI LU NL SE**

(71) Applicant: **Borden, Inc.**
**180 East Broad Street**
**Columbus Ohio 43215(US)**

(72) Inventor: **Chan, Lock Lim**
**10 Tumbleweed Road**
**Willowdale, Ontario(CA)**
Inventor: **Lau, Patrick Wan-Kit**
**30 Invermarge Drive**
**Scarborough, Ontario(CA)**

(74) Representative: **Wilkinson, Stephen John et al**
**Stevens, Hewlett & Perkins 1 St. Augustine's Place**
**Bristol BS1 4UD(GB)**

## (54) Polyamide-epichlorohydrin resin.

(57) This invention describes a method for making a thermosetting polyamide-epichlorohydrin wet strength resin which contains substantially reduced amounts of organic-chlorine contaminants while its wet strength property remains comparable to commercial polyamide-epichlorohydrin resins. The reduction of the contaminants is attained by reacting less than the total amount of epichlorohydrin with polyamide at any one time to substantially react all of the epichlorohydrin with the polyamide while retaining a part of the dual reactive functionality of the epichlorohydrin to provide thermosetting wet strength to the resin.

EP 0 515 750 A2

Background of the Invention

This invention relates to a process for preparation of a cationic, thermosetting polyamide-epichlorohydrin wet strength resin which contains substantially reduced amounts of organic-chlorine contaminants, while its wet strength property remains essentially comparable to commercial polyamide-epichlorohydrin resins.

The term wet strength in paper is defined as the property of extraordinary resistance to rupture or disintegration when the paper is wetted with water. Paper made from untreated cellulose fibers retains little of its original strength after it has been soaked with water. This disadvantage is important because a very significant quantity of paper is used under conditions which involve exposure to water, weather and humidity.

Aminoplastic resins, particularly urea-formaldehyde resins have been used as wet strength resins. This type of resin has advantages in effectiveness and economy few other resins can match. However, a low pH of 4.5 to 5.5 is required for effective curing of urea-formaldehyde wet strength resins. This requirement causes the paper to undergo acid-promoted decomposition and also accelerates the rate of corrosion of the paper making machine.

Epoxidized polyalkyleneamine-polyamide, also referred to herein simply as epoxidized polyamide or polyamide-epichlorohydrin, is presently widely used as a neutral curing wet strength resin. This chemical is a water soluble, cationic resin which is substantive to cellulose fibers. It can be cured effectively at a pH range of 4 to 10 at the temperatures encountered in the normal paper making process, to confer wet strength to the finished paper. It does not tend to increase the stiffness of the paper or reduce its water absorbency as urea-formaldehyde resin does.

Many different methods have been used to prepare epoxidized polyalkyleneamine-amide wet strength resins. Generally, however, two stages are involved in these processes. A prepolymer, polyalkyleneamine-amide containing the following structural units, $-NH[(CH_2)_nNH]_x-CORCO-$ wherein n and x are small integers of two or more and R is a divalent hydrocarbon radical of a dicarboxylic acid which can be saturated or unsaturated, is first prepared. The second stage involves the epoxidation of this prepolymer, usually by reacting with epichlorohydrin. The various processes reported in the prior art involve mainly the use of different reactants or different chemical reactions for the preparation of the prepolymer, whereas, the epoxidation is essentially the same, For example, dicarboxylic acids, the anhydrides of a dicarboxylic acid, dialdehyde, amino acids, lactams, etc. have been used to react with polyalkyleneamine to form the prepolymer, which is subsequently epoxidized by epichlorohydrin.

Some of these prior art patents are used to make polyamide-epichlorohydrin resins which have met with commercial acceptance, e.g. U.S. Patent 2,926,154 to G. Keim and U.S. Patent 3,887,510 to Chan et al. The Keim patent is used herein to demonstrate the chemistry and reaction steps involved. The first step involves the condensation polymerization between a dicarboxylic acid and a polyalkyleneamine to provide a polyamide which contains at least one secondary amine in the structural unit. For example, the condensation between adipic acid and diethylenetriamine is shown in reaction (1) Below.

$HOOC-(CH_2)_4-COOH$ + $H_2NCH_2CH_2NHCH_2CH_2NH_2$

(Adipic acid) + (Diethylenetriamine)

Heat

-----→ $-[-NHCH_2CH_2-NH-CH_2CH_2NH-CO-(CH_2)_4-CO-]_x-$

(polyamide, with secondary amine) Reaction (1)

The second step involves the addition of epichlorohydrin which is allowed to react with the polyamide prepared in step one (1).

The chemical reaction which leads to the formation of the thermosetting polyamide-epichlorohydrin can be described as follows:

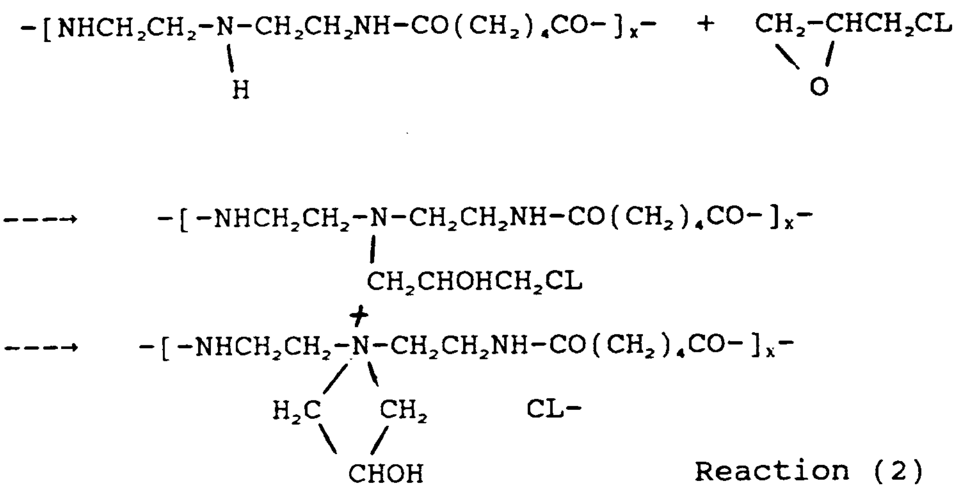

Reaction (2)

The amount of epichlorohydrin can be varied. For example, U.S.patent 2,926,154 states that sufficient epichlorohydrin should be used to convert all secondary amine groups to tertiary amine groups. In general, satisfactory results may be obtained utilizing from about 0.5 mol to about 1.8 mol of epichlorohydrin for each secondary amine group of the polyamide. In order to obtain an efficient wet strength resin, the preferred amount of epichlorohydrin is 1.0 mol to about 1.5 mol per mol of the resin.

It is also known that epichlorohydrin reacts with water and acid to undergo a hydrolysis reaction which forms hydrolyzed by-products comprising 1,3-dichloro-propan-2-ol (DCP), and 3-chloro-propanediol (CDP). This type of hydrolysis does not generally affect the crosslinking reaction, (2) above, and wet strength properties. Therefore, these hydrolyzed by-products have not been dealt with in the prior art.

The presence of organohalogens, particularly organochlorine substances in the effluent water, are of important environmental concern. In environmental analysis, these substances are measured as Adsorbable Organo halogen (AOX) or total organic halogen (TOCL). For example, West German effluent control legislation (21. Neufassung des Abwasserabgabengesetzes vom 05. Marz 1987, Bundesgesetzblatt 1, page 880) sets thresholds of 100 microgrammes per liter and a total discharge of 10 kg for AOX. While most of organo-halogen compounds are formed in the pulping process, the presence of "CDP" and "DCP" in the polyamide-epichlorohydrin resins in papermaking may add to the amount of "AOX" and "TOCL".

The presence of "CDP" and "DCP", particularly "DCP", is also a matter of concern in the hazardous nature of polyamide-epichlorohydrin resins. For example, it is reported that European Economic Community is requiring that all products containing 0.1% or more of "DCP" be labelled for carcinogenicity by June 7, 1991. A typical commercial polyamide-epichlorohydrin wet strength resin at 12.5% solids contains approximately 1.7% to 1.2% of "DCP" as determined by gas chromatography. A polyamide-epichlorohydrin resin at 12.5% solids, prepared by the process described in this invention, however contains only about 0.03-0.08% of "DCP" and "CDP" , i.e. definitely less than 0.1%. In addition to reducing hydrolyzed by-products, the wet strength efficiency of resin prepared according to this invention is comparable to that imparted by commercial polyamide-epichlorohydrin wet strength resins prepared by processes described in the prior art.

Prior Art

The first commercially successful polyamide-epichlorohydrin resin made according to U.S. Patent 2,926,154, of Feb. 23, 1960 to G. Keim involved the use of a dicarboxylic acid (adipic acids) and polyalkyleneamine (diethylenetriamine) to prepare a water soluble polyamide and subsequently reacting this polyamide with epichlorohydrin.

Recently, the assignee of the Keim patent, namely, Hercules Incorporated, has introduced a product designated as Kymene 557LX. This new product is described as " a high-efficiency , cationic wet-strength resin that functions under acid or alkaline papermaking conditions. Although it is used primarily to impart wet strength, it has several other important applications in papermaking. It has a marked advantage over other commercially available neutral cure wet-strength resins in that it contributes significantly less to the formation of chlorinated organic compounds in mill effluent streams and the finished paper products." Allegedly, KYMENE 557LX contains less than 0.1% of of DCP and CDP by-products for a 12.5% solids concentration. Applicants do not know the method of production for that new product.

Another commercially successful polyamide-epichlorohydrin resin is prepared according to U.S.Patent 3,887,510 to Chan et al.of June 3, 1975. In the Chan et al. patent, esters of dicarboxylic acids are reacted with polyalkyleneamine to produce a water soluble polyamide resin. This polyamide is subsequently reacted with epichlorohydrin to form a cationic thermosetting resin.

The concern of hydrolyzed products, i.e. DCP and CDP's are not mentioned in these patents. As it is shown in Example 4 herein, polyamide-epichlorohydrin prepared according to these two patents contain 15 to 20 times more DCP and CDP than those prepared according to this invention.

The Keim and Chan et al. patents state that the molar ratio of epichlorohydrin to the secondary amine groups of polyamide can vary from 0.5 to 1.8 preferably from 1 to 1.5. The amount of epichlorohydrin can vary within this range to adjust the rate of reaction. However, there is no mention that by changing the method of addition of epichlorohydrin, the thermosetting characteristics of the polyamide-epichlorohydrin resin can be altered.

U.S. Patent 3,329,657 to Strazdins of July 4, 1967, modified the reaction conditions of the above mentioned Keim and Chan et al. patents by adding epichlorohydrin in small portions such that epichlorohydrin is substantially, bifunctionally, completely reacted to produce a water soluble crosslinked polymer. However, the resin prepared according to Strazdins is not thermosetting and imparts a low degree of wet strength to paper products. Strazdins emphasizes the addition of epichlorohydrin in such small increments that the epichlorohydrin is essentially bifunctionally completely reacted, and that the polyamide-epichlorohydrin is a non-thermosetting, water soluble, storage-stable, cationic resin. Furthermore Strazdins describes his resin as acting as a retention aid and drainage aid without imparting more than a negligible amount of wet strength when used in the manufacture of paper.

An article entitled "REDUCTION OF TOTAL ORGANIC CHLORIDE CONTAMINANTS IN POLYAMINOAMIDE-EPICHLOROHYDRIN RESINS" by D.I. Devore, S.A. Fischer and N.S. Clungeon of the Henkel Corporation which appeared in the proceedings of the 1991 Papermakers Conference in Seattle, WA. on April 7-10 is pertinent. This article shows the effect of varying the molar ratio of epichlorohydrin in relation to the polyamide. Process variables, including, temperature, concentration, reaction time and feed rates for lowering organic chlorine contaminants while maintaining "acceptable " wet strength are mentioned. However, the effect of these process variables which are mentioned and the optimum conditions do not appear to be shown in the paper nor is applicants' method.

## SUMMARY OF THE INVENTION

This invention is directed to methods for making epoxidized polyamide wet strength resins as well as the use of such resins to impart wet strength to paper.

In the invention of this patent application, epichlorohydrin is added in small quantities to facilitate the reaction between epichlorohydrin and polyamide, i.e. the disappearance of epichlorohydrin in the aqueous solution as fast as possible, and substantially reduces the possibility of hydrolysis. The epichlorohydrin is not allowed to substantially, bifunctionally, completely react so that the resultant polyamide-epichlorohydrin is thermosetting and is an efficient wet strength resin.

Another feature of the resins made according to the present invention is that even when a lower epichlorohydrin to secondary amine molar ratio is used, the wet strength efficiency is comparable to commercial wet strength resins such as that of the above mentioned Keim and Chan et al. patents, which are made with a higher epichlorohydrin/amine ratio.

## DETAILED DESCRIPTION OF THE INVENTION

This invention provides a method for the preparation of polyamide-epichlorohydrin type wet strength resins which: contain substantially less hydrolysis by-products of epichlorohydrin, such as 1,3-dichloro-2-propanol and 3-chloro-1,2-propanediol; have efficiency in imparting wet strength properties to paper essentially comparable to that of resins prepared in the prior art; and are cationic, thermosetting resins.

The conventional method for determining molar ratios is used herein when referring to the dibasic acids or esters and the polyalkylenepolyamines used to prepare the polyalkyleneamine-amide. However, for the epoxidation reaction, we are concerned with each of the secondary and tertiary amines of the polyalkyleneamine-amide so that the weight of the polymer used to give one titratable amine is used as the gram molecular weight. This is conventional in this art as can be seen from prior art patents.

The polyamide used in this invention can be represented by the general structure of polyalkyleneamine-amide:

$$-[\ \overset{O}{\overset{\|}{C}}-(CH_2)_n-\overset{O}{\overset{\|}{C}}-\overset{H}{\overset{|}{N}}-(CH_2)_x-\overset{H}{\overset{|}{N}}-CH_2)_y-\overset{H}{\overset{|}{N}}-]_z \qquad ;$$

wherein n,x,y,and z are numbers of repeating units ranging from 2,3,4, etc.

An important part of this invention is the manner in which epichlorohydrin is allowed to react with polyamide. Not more than about half of the contemplated quantity of epichlorohydrin is added to an aqueous solution of the polyalkyleneamine-amide at any one time. This can be done by separate additions or by continuously metering a small quantity of the epichlorohydrin to the aqueous solution under reaction conditions which quickly eliminate free epichlorohydrin from the aqueous medium due to reaction with the polyamide while at the same time controlling the reaction temperature to less than about 60 °C. Although the epichlorohydrin is reacted with the polyamide in this epoxidation, it is not fully reacted due to its bifunctionality, so that it is available to further cross link the polymer and become thermosetting when used as a wet strength resin. The proper control in the epoxidation reaction of the polyamide is attained in the reaction medium by: the quantity of epichlorohydrin introduced at any one time; the percent of polyamide solids; and by cooling. According to this invention, the total charge of epichlorohydrin is preferably divided into small and specified portions. Each of these portions is added to the polyamide solution and allowed to react to a desired degree of reaction before another portion is added. The reaction is allowed to take place in such a way that the resulting polyamide-epichlorohydrin is thermosetting.

The epichlorohydrin is bifunctional since it can react at the epoxy group and the chloro group. It is believed that free epichlorohydrin in the aqueous reaction medium initially attaches itself to the polyamide by opening of the epoxy group. This reaction removes the epichlorohydrin from the aqueous solution. Crosslinking of the polymer and its thermosetting properties are believed to occur principally by reaction of the chloro group

It is expected that one can make use of methods in the prior art to prepare a thermosetting polyamide-epichlorohydrin which contains low quantities of DCP and CDP by reducing the amount of epichlorohydrin to polyamide. However, such a practice would lead to a substantial reduction in wet strength properties.

## Preparation of the Polyalkyleneamine-amide

It is permissible to use, in this invention, any water soluble polyalkyleneamine-amide which contains the recurring structure:

$$-NH(C_nH_{2n}NH)_x\overset{O}{\overset{\|}{C}}R\overset{O}{\overset{\|}{C}}-$$

wherein n and x are integers equal to 2 or more, and R is the divalent hydrocarbon radical of dicarboxylic acid. R can be saturated or unsaturated hydrocarbon. An example of suitable polyalkyleneamine-amides is the reaction product between saturated dicarboxylic acid, e.g. adipic acid, and polyalkyleneamine, e.g. diethylenetriamine as described in U.S.Patent 2,926,154. Polyalkyleneamine-amides prepared by reacting an unsaturated dicarboxylic acid, e,g. itaconic acid, with diethylenetriamine as described in U.S. Patent 3,125,552 can also be used. In general the polyalkyleneamine-amide can be prepared by any means known in the prior art, as long as it contains a structural unit that has at least one secondary amine group between two amide groups.

Preferred dicarboxylic diesters include dimethyl malonate, diethyl malonate, dimethyl succinate, di-isopropyl succinate, dimethyl glutarate, di-isobutyl glutarate, dimethyl adipate, di-n-propyl adipate, methyl ethyl adipate or a mixture of dimethyl adipate and diethyl glutarate. The preferred diester is dimethyl glutarate.

While the diester component is preferably formed from a $C_3$ to $C_6$ dicarboxylic acid, both saturated and unsaturated aliphatic acids may be used, and, as well, acids having fewer than three carbons and more than 6 carbons, such as, for example, oxalic, pimelic, suberic, azelaic, sebacic, and, as well, unsaturated acids such as maleic and fumaric.

The polyalkylene polyamines contemplated for use in making the polyalkyleneamine-amides include those

having two primary amine groups and at least one secondary amine group. Suitable polyalkylene polyamines include diethylenetriamine, triethylenetetramine, tetraethylenepentamine, dipropylenetriamine, and dihexylenetriamine. The preferred polyamine is diethylenetriamine.

The polyalkyleneamine-amide is preferably made by the condensation polymerization between dimethyl glutarate and diethylenetriamine. A molar ratio of diester to polyalkylene polyamine from about 0.9/1 to about 1.2/1 is preferred. Details of this polymerization are describes in U.S. Patent 3,887,510 to Chan et al. This polymerization is illustrated in Example 1 herein.

Method for Preparation of the Epichlorohydrin-polyalkyleneamine-amide Resin

Epichlorohydrin is reacted with polyalkyleneamine-amide in an aqueous solution. Not more than about half of the contemplated quantity of epichlorohydrin is added to the polyalkyleneamine-amide at any one time. The total amount of epichlorohydrin charged to the polyalkyleneamine-amide is generally made with between 2 to 5 separate additions. The molar ratio of epichlorohydrin: amine in each addition can range from 0.1 to 0.4 :1, although the preferred molar ratio of epichlorohydrin: amine is 0.2: 1. The amount of water added is such that the concentration of the total reactants is maintained within a range wherein the initial exotherm can be controlled easily to below about 60° C with cooling. Normally, adding sufficient water to give the polyalkyleneamine-amide a solids content of between about 20% to 30% is acceptable, although 25% is the preferred solids content of the polyalkyleneamine-amide before reaction. With the addition of epichlorohydrin in several stages, this gives the permissible range of total molar ratio of epichlorohydrin: amine in the polyamide at about 0.3 to 0.8 : 1, while the preferred total molar ratio of epichlorohydrin : amine stands at about 0.6 : 1.

The reaction temperature and concentration of reactants can be determined by those skilled in the art so that the reaction rate can be controlled. It is preferred that a reaction temperature of about 30° C to 60° C be used, depending on the degree of condensation required and the concentration of reactants at the time of reaction. The degree of polymerization will affect the wet strength properties of the final product. For example, resin with Brookfield Viscosity (LVF2/60rpm/25° C) at 20 to 100 cps, as measured at 13% solids content gives satisfactory results.

In a preferred method for making the epichlorohydrin-polyalkyleneamine-amide resin, the total charge of epichlorohydrin to the polyalkyleneamine-amide is again divided into small and specified portions. Epichlorohydrin is allowed to react with polyalkyleneamine-amide preferably at an epichlorohydrin to amine molar ratio of 0.2 to 1 in aqueous solution. At this stage of the reaction, a suitable amount of water present adjusts the concentration of the polyalkyleneamine-amide to about 25% so that the reaction can proceed at a desirable rate. The reaction is preferably run at about 55° C for 10 minutes. The batch is then cooled to preferably 25° C to 30° C. An additional amount of epichlorohydrin at the same 0.2 to 1 molar ratio of epichlorohydrin to amine is added and the above procedure is repeated. A total of three epichlorohydrin additions of the same amount is carried out. The total epichlorohydrin to amine molar ratio is preferably at 0.6 to 1. The addition of epichlorohydrin in three separate stages is a preferred operation. After all the epichlorohydrin has been added, the batch is heated to about 40°-50° C to complete the reaction. This further heating for completion of the reaction generally takes from about 1 to 2 hours. The rate of polymerization is manipulated by the control of reaction temperature and reaction solids. Acid such as sulfuric acid is used to adjust the pH of the final product to about 3.0 to stabilize the resin at about 13% solids content. Typical physical properties of this resin are: Brookfield Viscosity (LVF2/60rpm/25° C) of 30 to 50 cps; solids content of 13+/-0.5%; pH at 25° C of 3.0+/-0.1; specific gravity at 25° C of 1.037 to 1.047; and a Gardner Colour of 0-4.

Methods of Use

The wet strength resin described in this application can be applied in the same manner as conventional epoxidized polyamide resins. Thus, the wet strength resins of this invention can be applied to paper by tub application if desired. The resin can also be applied to partially or completely dried paper by immersion in, or spraying with an aqueous solution of this wet strength resin, followed by drying and curing at higher temperatures, for example, at 105° C for suitable periods of time, for up to about an hour.

Preferably the resin of this invention is added to the pulp slurry in the papermaking system where there is sufficient mixing. The amount of resin added can be between 0.1 to 2% by weight of the dry pulp, depending on the degree of wet strength desired in the finished paper product. Generally, sufficient wet strength resin is added within the above mentioned 0.1 to 2% range so that the wet strength of the paper is greater than about 15% of its dry strength. The pH of the system during papermaking is preferably at about

6 to 8.

The following examples are illustrative of the invention. Unless otherwise set forth parts and percentages are by weight. As to the Brookfield Viscosity, the abbreviation LVF refers to the model of the equipment, the first number thereafter, e.g. 2 or 3, refers to the spindle size and the number before the temperature is the revolutions per minute of the spindle.

EXAMPLE 1

PREPARATION OF THE POLYALKYLENEAMINE-AMIDE

This example illustrates the preparation of the polyalkyleneamine-amide from dimethyl glutarate and diethylenetriamine according to the procedure described in Chan et al. U.S. Patent 3,887,510 of 1975.

39.91 parts of dimethyl glutarate and 26.33 parts of diethylenetriamine were put into a reactor and mixed. The mixture was heated from 80°C to 105°C for 2 to 3 hours. Methanol was distilled off. 47.82 parts of water was then added to the reactor and mixed. The polyalkyleneamine-amide would have a solid content of 49% to 51% and a Brookfield Viscosity (LVF 3/60rpm/25°C) of 260 to 380 cps.

EXAMPLE 2

PREPARATION OF CONVENTIONAL EPICHLOROHYDRIN-POLYALKYLENEAMINE-AMIDEWET STRENGTH RESIN

This example describes the preparation of a 20% solids conventional , epichlorohydrin-polyalkyleneamine-amide wet strength resin made according to U.S. Patent 3,887,510. 24.7 parts of a polyamide solution as produced in Example 1, 16.8 parts of water and 8.9 parts of epichlorohydrin were added to a reactor. The solution was heated to and held at 50-55°C. When the Brookfield viscosity of the solution reached 400 cps (LVF 2/60 rpm/25°C), water was added and the pH was adjusted to 4.0 with sulfuric acid. The product had 20% solids content and a Brookfield Viscosity (LVF 2/60 rpm/25°C) of 90-100 cps.

EXAMPLE 3

PREPARATION OF THE THERMOSETTING WET STRENGTH RESIN OF THIS INVENTION

This example describes the preparation of a 13% solids thermosetting wet strength resin of this invention. Into a three-necked flask equipped with mechanical stirrer. reflux condenser thermometer and sampling device, 180 gm of a polyamide solution as produced in Example 1 was added. 187.7 gm water was added and stirred. This was followed by the addition of 9.1 gm epichlorohydrin. The batch was heated to 50-55°C and held at this temperature range for 10 to 15 minutes. The batch was then cooled to 25°C in 15 minutes. 9.1 gm epichlorohydrin was added. The batch was heated to 50-55°C and held at this temperature range for 10 to 15 minutes. The batch was again cooled to 25°C as before. Another 9.1 gm epichlorohydrin was added, followed by addition of 201.1 gm water. Temperature and solids content were manipulated to give a reasonable reaction rate throughout the reaction. Polymerization was allowed to take place until the batch had a Brookfield Viscosity measurement of 65 to 75 cps at 35°C to 40°C. Water was added to stop the reaction. The pH was adjusted to 3.0 with sulfuric acid. The resin had the following properties: Solid content of 13.5%; Brookfield Viscosity (LVF 2/60 rpm/25°C) of 35 cps; pH at 25°C of 3.0; and specific gravity (S.G.) at 25°C of 1.048.

EXAMPLE 4

WET STRENGTH PERFORMANCE OF THE RESIN OF THIS INVENTION COMPARED TO CONVENTIONAL, COMMERCIALLY AVAILABLE EPOXIDIZED POLYALKYLENEAMINE-AMIDE RESIN

This example describes the wet strength performance of the resin of this invention as made in Example 3 as compared with conventional, commercially available epoxidized polyalkyleneamine-amide wet strength resin. It was found that the wet strength resin of this invention was comparable in wet strength performance to commercially available resins.

To illustrate the usefulness of the resin derived from the process of this invention, the resin from

Example 3 was tested according to the following standard procedure.

A 50/50 blend of bleached softwood kraft and bleached hardwood kraft pulp at 1.6% consistency was beaten to a Canadian Standard Freeness of about 500 ml. This slurry was then diluted to a consistency of 0.25%. The pH was adjusted to 7.0 with sulfuric acid and the resulting pulp slurry was used as a stock for resin addition. 10 ml of a 0.25% concentration solution of the resin was added to a one liter aliquot of the stock slurry. This is equivalent to the addition of 1.0% resin solids based on the bone dry pulp. Different resin levels con be obtained by the addition of different volumes of this 0.25% resin solution. The resin-treated slurry was agitated for 5 minutes and then emptied into a Williams handsheet mold where it was diluted with make-up water to 12 liters. The make-up water was derived from water with its pH adjusted to 7.0. The wet handsheets were pressed between blotters using a Williams Hydraulic Press. The handsheets were then dried in an Emerson Dryer at 230 ° F (110 ° C) to a moisture content of 5% to 6%. The resulting handsheets were then cured in a Blue "M" Force Air Oven for 5 minutes at 105 ° C. The cured handsheets were conditioned at 72 ° F (23 ° C) and 50% relative humidity overnight before testing.

Wet and dry tensile strengths were determined using an Instron tensile tester (model number 1123) with strength measured in kg per 15 mm width. The wet tensile strength was determined immediately after wetting the specimen with 1 ppm Triton X-100 solution (a commercially available wetting agent identified by the manufacturer as octyl phenoxy polyethoxy ethanol). At least 15 specimens were used for each resin under each test condition. The results represent the average of these observed values for the specimens. Typical test results are summarized in Table 1 which records the tensile strength of paper made with varying amounts of prior art resins and the resin of this invention.

TABLE 1
TENSILE STRENGTH OF RESIN TREATED PAPER

| Resin | Tensile (kg/15mm) | | Wet Strength |
|---|---|---|---|
| At 0.3% Resin Level | Wet | Dry | (%) |
| Cascamid C20* | 1.43+/-0.11 | 6.2+/-0.4 | 23.1 |
| Kymene 557** | 1.49+/-0.11 | 6.0+/-0.4 | 24.8 |
| Example 3 (Resin of this invention) | 1.25+/-0.08 | 6.5+/-0.5 | 19.2 |
| At 0.6% Resin Level | | | |
| Cascamid C20* | 1.65+/-0.13 | 6.8+/-0.3 | 24.3 |
| Kymene 557** | 1.74+/-0.11 | 6.6+/-0.3 | 26.4 |
| Example 3 (Resin of this invention) | 1.63+/-0.08 | 6.8+/-0.4 | 24.0 |
| At 0.9% Resin Level | | | |
| Cascamid C20* | 1.82+/-0.17 | 6.4+/-0.5 | 28.4 |
| Kymene 557** | 1.86+/-0.14 | 6.6+/-0.4 | 28.2 |
| Example 3 (Resin of this invention) | 1/82+/-0.12 | 7.1+/-0.6 | 25.6 |

* Cascamid C20- Commercial resin made by The Borden Company Limited pursuant to Chan et al. U.S. Patent 3,887,510

** Kymene 557 -Commercial resin made by Hercules Incorporated and believed to be made pursuant to Keim U.S. Patent 2.926,154. This is not the same resin as Kymene 557 LX described in the Prior Art section hereof.

The data in the above Table 1 shows that when the same amount by weight of wet strength resin is used, the paper made from each of the three wet strength resins have about the same wet strength

performance.

EXAMPLE 5

PREPARATION OF WET STRENGTH RESIN WITH THE SAME EPICHLOROHYDRIN TO AMINE MOLAR RATIO AS THE RESIN OF THE INVENTION IN EXAMPLE 3 BUT WITH TOTAL EPICHLOROHYDRIN IN ONE ADDITION

This example describes the preparation of a wet strength resin with the same epichlorohydrin to amine molar ratio as the resin of the invention in Example 3 but made in the conventional way with all the epichlorohydrin in one addition. 180 gm of a polyamide solution as produced in Example 1, together with 184.1 gm of water were added into a three-necked flask equipped with mechanical stirrer reflux condenser, thermometer and sampling device. This was followed by the addition of 27.1 gm epichlorohydrin. The batch was heated to 50 °C. Temperature and solids content were manipulated to give a reasonable reaction rate throughout the reaction as in Example 3. Polymerization was allowed to take place until the same end point of Example 3 was reached, i.e. to a Brookfield Viscosity measurement of 65 to 75 cps at 35 °C to 40 °C at the same reaction solids content. Water was added to stop the reaction and the pH was adjusted using sulfuric acid. The resin has the following properties: solids content of 13.4%; Brookfield Viscosity (LVF 2/60 rpm/25 °C) of 42 cps; pH at 25 °C of 3.0; and specific gravity at 25 °C of 1.046.

EXAMPLE 6

WET STRENGTH PERFORMANCE OF THE RESIN OF THIS INVENTION USING MULTIPLE ADDITIONS OF EPICHLOROHYDRIN COMPARED WITH RESIN MADE WITH ONE EPICHLOROHYDRIN ADDITION

This example describes the wet strength performance of the resin of this invention as made in Example 3 as compared to another resin of the same epichlorohydrin to amine molar ratio but with epichlorohydrin charged to the batch in one addition as in Example 5. The paper testing conditions were the same as described in Example 4. It was found that the wet tensile performance of the resin of this invention as made in Example 3 was about 15% better than resin made in Example 5. Test results of this example are summarized in Table 2.

TABLE 2

COMPARISON OF TENSILE STRENGTH AT 0.5% RESIN LEVEL CURED AT 105°C AT DIFFERENT CURE TIMES

| Resin | Tensile (kg/15mm) | | Wet Strength |
|---|---|---|---|
| | Wet | Dry | % |
| Cure for 5 minutes | | | |
| Example 3 | 1.49+/-0.10 | 6.6+/-0.5 | 22.6 |
| Example 5 | 1.28+/-0.08 | 5.6+/-0.6 | 22.9 |
| Cure for 30 minutes | | | |
| Example 3 | 1.73+/-0.15 | 6.7+/-0.3 | 25.8 |
| Example 5 | 1.47+/-0.10 | 6.2+/-0.4 | 23.7 |

EXAMPLE 7

ANALYSIS OF EPICHLOROHYDRIN HYDROLYSIS PRODUCTS IN WET STRENGTH RESINS BY GAS CHROMATOGRAPHY (GC)

This example describes the method to analyze the amount of epichlorohydrin hydrolysis products, 1,3-dichloro-2-propanol (1,3-DCP) and 3-chloro-1,2-propandiol (3-CPD) in epoxidized polyamide resins by gas chromatography (GC). Resin of this invention as made in Example 3 and conventional commercially available epoxidized polyalkyleneamine-amide wet strength resin as made in Example 2 were analyzed using GC according to the following procedure.

A standard containing expected concentrations of the two analytes (1,3-DCP AND 3-CDP) in water was injected into the gas chromatograph until a reproducible response was obtained. This was followed by injections of the diluted resin (approximately 1 gm per 10 ml dilution - precisely weighed), also until reproducible. This in turn was followed by a repeat of the original standard.

$$\%\ \text{Analyte} = \frac{\text{Average sample peak area}}{\text{Average standard peak area}} \times \frac{\text{Analyte weight (gm/10ml)} \times 100}{\text{Sample weight (gm/10 ml)}}$$

The above calculation was performed for both analytes.

The following sets forth chromatographic details for the analysis:

Column- DB 1701, 60m X 0.331 mm, 1.0 µm thickness, J&W Scientific, part #1230763
Temperatures: Column- 120°C isothermal, programmed to 250°C for 5 minutes after sample run.
Injector- 200°C
Detector-250°C /F.I.D.
Sample size: 1 µl
Retention times: 1,3-DCP - 9 minutes
3-CPD - 14 minutes
Gases: Detector (Air 300 ml/min, Hydrogen 30 ml/min)
Carrier (Helium 2-3 ml/min)
Makeup (Nitrogen to 30 ml/min)

Alternately, using a 6 foot by 1/4 inch SS column, a 5% Carbowax on Chromosorb T 40/60 can be used for this analysis although reproducibility in not as good as with the DB1701 column.

Injector: 220°C
Column: 170°C
Detector: 250°C
Flow rate: 40 ml/min Helium

The following Table 3 shows analysis of epichlorohydrin hydrolysis products of resins of this invention (Example 3) and of a conventional, commercially available wet strength resin.

TABLE 3

| ANALYSIS OF EPICHLOROHYDRIN HYDROLYSIS PRODUCTS BY GC | | |
|---|---|---|
| Resin | % 1,3-dichloro 2-propanol | % 3-chloro-1,2-propandiol |
| Example 3 (Resin of this invention) | 0.04 | 0.01 |
| Cascamid C20 (Diluted to 13% solids for comparison purposes) | 0.86 | 0.08 |

Table 3 shows about a 95% drop in total amount of epichlorohydrin hydrolysis products in the resin of this invention when compared to the amount in conventional commercially available wet strength resin.

## EXAMPLE 8

### ANALYSIS OF EPICHLOROHYDRIN HYDROLYSIS PRODUCTS IN WET STRENGTH RESINS BY HIGH PERFORMANCE LIQUID CHROMATOGRAPHY (HPLC)

This example describes the method to analyze the amount of epichlorohydrin hydrolysis products, 1,3-dichloro-2-propanol (1,3-DCP) and 3-chloro-1,2-propandiol (3-CPD) in epoxidized polyamide resins by high performance liquid chromatography (HPLC). Resin of this invention as made in Example 3 and conventional commercially available epoxidized polyalkyleneamine-amide wet strength resins were analyzed using HPLC according to the following procedure.

4.5 gm of resin sample was added into a beaker. 10 ml of isopropanol was added slowly with stirring for twenty minutes. The material was allowed to settle for 5 minutes. 3 to 4 ml solution was drawn off the top layer and filtered through a 0.45 µm syringe filter. Then 2 ml of this solution along with 1 ml of HPLC grade water were diluted to 10 ml with the solvent which was 10% methanol/90% water (w/w).

Standard solutions of hydrolysis products were prepared by adding approximately 0.05 gm (precisely weighed) of each hydrolysis product to 10 ml HPLC grade water. These solutions were treated as resins and samples were prepared in the above manner. Two standard solutions were made for comparison purposes. For each resin or standard solution prepared, at least two injections of 50 µl should be made for reproducibility.

The following are the chromatographic details for the analysis:

System: Pump- Waters 6000A
Injector- Waters U6K
DRI- Waters R401
Data- Waters 745B

| | |
|---|---|
| Column: | RCM 8 X 10 |
| Solvent: | 10% methanol / 90% water (w/w) |
| Flow Rate: | 1.2 ml/min |
| Column Temp: | 30 °C |
| Sample size: | 50 µl |
| Retention times: | 3-CDP 4.2-4.5 minutes |
| | 1,3-DCP 11.0-12.0 minutes |

The following Table 4 shows the results of analysis of epichlorohydrin hydrolysis products of various epoxidized polyalkyleneamine-amide resins.

TABLE 4

| ANALYSIS OF EPICHLOROHYDRIN HYDROLYSIS PRODUCTS BY HPLC | | |
|---|---|---|
| Resin | %1,3-dichloro-2-propanol | % 3-chloro-1,2-propandiol |
| Example 3 (Resin of this invention) | ND* | ND* |
| Cascamid C20 (diluted to 13% solids for comparison purposes) | 1.13 | 0.13 |
| Kymene 557 (12.5% solids) | 1.14 | 0.25 |
| ND* - not detected by HPLC because the amount of materials present was below the estimated detection limit of the HPLC for 1,3-DCP at 0.1% and 3-CDP at 0.02%. | | |

The results of Table 4 show that while HPLC could be used to analyze epichlorohydrin hydrolysis products in conventional commercially available wet strength resins, it was not sensitive enough to analyze the low quantities of epichlorohydrin hydrolysis products in the resin of this invention.

**Claims**

1. A method for preparing an aqueous solution of a cationic, thermosetting polyalkyleneamine-amide-epichlorohydrin wet strength resin containing less than about 0.1% by weight of 1,3-dichloro-propan-2-ol and 3-chloro-propanediol which comprises: contacting an aqueous solution of a polyalkyleneamine-amide polymer which has at least one secondary amine group between two amide groups at a temperature of about 30 °C to 60 °C with epichlorohydrin in an amount such that the mol ratio of epichlorohydrin to the sum of secondary and tertiary amine groups in said polymer is from about 0.3 :1 to 0.8 : 1 by adding not more than about half of the epichlorohydrin at any one time to the aqueous solution of said polymer to react essentially all of the epichlorohydrin with said polymer while maintaining a sufficient amount of unreacted functionality of the epichlorohydrin to provide a resin thereby produced with thermosetting wet strength paper additive properties.

2. The method of claim 1 wherein the solids content of said polymer in the aqueous solution is from about 20% to 30% by weight of the solution.

3. The method of claim 3 wherein the wet strength resin solution is characterized by a Brookfield Viscosity of about 20 to 100 cps as measured on a Brookfield LVF viscometer using a # 2 spindle at 60 rpm at 25 °C at a resin solids concentration of 13% by weight of the solution.

4. The method of claim 3 wherein said polymer is the reaction product of a polyalkylenepolyamine and a diester of an aliphatic polycarboxylic acid.

5. The method of claim 4 wherein said polymer is the reaction product of a polyalkylenepolyamine and a diester of an aliphatic dicarboxlylic acid.

6. A method for preparing an aqueous solution of a cationic, thermosetting epoxidized polyalkyleneamine-amide wet strength resin which comprises: reacting about 0.3 to 0.8 moles of epichlorohydrin with each mole of a polyalkyleneamine-amide polymer having at least one secondary amine group between two amide groups, said polymer being in aqueous solution with said reaction conducted in a series of between 2 to 5 separate additions of epichlorohydrin to said polymer wherein the molar ratio of epichlorohydrin to said polymer in each addition is from about 0.1 to 0.4 : 1 and wherein the reaction is conducted to the extent of obtaining a polymer having a viscosity of about 20 to 100 cps as measured on Brookfield LVF viscometer using a # 2 spindle at 60 rpm and 25 °C for a 13% resin solids concentration in said wet strength resin solution.

**7.** The method of claim 6 wherein the reaction temperature is maintained at below about 60 °C.

**8.** The method of claim 7 wherein the total quantity of any 1,3-dichloro-propan-2-ol and 3-chloropropanediol produced in the reaction is less than about 0.1% by weight of the aqueous solution of the wet strength resin.

**9.** The method of claim 8 wherein the initial concentration of the polyalkyleneamine-amide polymer solids in solution is from about 20% to 30% by weight of the aqueous solution.

**10.** A method for the preparation of a cationic, thermosetting, epichlorohydrin-polyalkyleneamine-amide wet strength resin which comprises contacting epichlorohydrin with an aqueous solution of a polyalkyleneamine-amide polymer wherein the epichlorohydrin is gradually added to the aqueous solution at a temperature of less than about 60 °C to react substantially all the epichlorohydrin with said polymer and wherein the molar ratio of epichlorohydrin to the amide is from about 0.3 : 1 to 0.8 : 1 while a portion of the dual functionality of the epichlorohydrin remains unreacted to provide the thermosetting properties to said resin.

**11.** A wet strength resin prepared by the method of claim 10.

**12.** A method for making a wet strength paper which comprises incorporating therein as a wet strength additive, the resin prepared by the method of claim 10.

**13.** A method for improving the wet strength of paper which comprises adding to paper a resin prepared by the method of claim 1.